# EUROPÄISCHE PATENTSCHRIFT

(11) **EP 0 935 700 B1**
(45) Veröffentlichungstag und Bekanntmachung des Hinweises auf die Patenterteilung: **16.08.2000**
(21) Anmeldenummer: 97948771.7
(22) Anmeldetag: 21.10.1997
(51) Int. Cl.: E21B 37/06, C11D 1/74

(54) **VERWENDUNG BIOLOGISCH ABBAUBARER ALKOXYLIERUNGSPRODUKTE ZUM REINIGEN VON BOHRLÖCHERN, BOHRGERÄTEN ODER BOHRKLEIN**
USE OF BIODEGRADABLE ALCOXYLATION PRODUCTS FOR CLEANING BOREHOLES, BORING INSTRUMENTS OR BORINGS
UTILISATION DE PRODUITS D'ALCOXYLATION BIODEGRADABLES POUR LE NETTOYAGE DE TROUS DE FORAGE, D'EQUIPEMENTS DE FORAGE OU DE DEBLAIS DE FORAGE

(30) Priorität: 30.10.1996 DE 19643857
(43) Veröffentlichungstag der Anmeldung: 18.08.1999
(73) Patentinhaber: Cognis Deutschland GmbH, 40589 Düsseldorf (DE)
(72) Erfinder: MÜLLER, Heinz, D-40789 Monheim (DE); HEROLD, Claus-Peter, D-40822 Mettmann (DE); SCHRECK, Berthold, D-40476 Düsseldorf (DE); PODUBRIN, Stefan, D-45481 Mülheim an der Ruhr (DE); HEIDBREDER, Andreas, D-40593 Düsseldorf (DE)
(86) Internationale Anmeldenummer: EP9705800
(87) Internationale Veröffentlichungsnummer: WO9819043

(56) Entgegenhaltungen:
- DE-A- 3 923 394
- DE-A- 4 134 973

## Beschreibung

Die vorliegende Erfindung betrifft die Verwendung biologisch abbaubarer Alkoxylierungsprodukte zum Reinigen von Bohrlöchern, Bohrgeräten oder Bohrklein, ein Additiv, das diese Alkoxylierungsprodukte enthält, sowie ein Reinigungsmittel, das diese Additive enthält, sowie Verfahren zur Reinigung von Bohrlöchern, Bohrgeräten oder Bohrklein.

Beim Erbohren und Fördern von Erdöl- oder Erdgasvorkommen müssen an vielen Stellen Reinigungsschritte eingefügt werden, um einen problemlosen Ablauf des Bohr- und Förderprozesses zu gewährleisten. So muß das Bohrloch nach der eigentlichen Bohrung für die Förderung von Öl oder Gas vorbereitet werden (Komplettierung). Dazu wird zur Stabilisierung des Bohrlochs ein äußeres Rohr, das sogenannte "casing" oder Futterohr eingebracht, und einzementiert. Der Zement wird in einer wäßrigen, flüssigen Form durch das Rohr geleitet, tritt am unteren Ende des Casings aus und erhärtet zwischen Bohrlochwand und äußerem Rohr. Um einen optimalen Zementierungsprozess zu gewährleisten, ist es notwendig die Bohrlochwand und die Casings von anhaftenden Resten der Bohrspülung und feinteiligen anhaftende Feststoffen zu befreien. Anderenfalls besteht die Gefahr, daß Hohlräume oder Kanäle in der Betonschicht entstehen, die die Stabilität des Betons verringern. Außerdem können Reste der Bohrspülung mit dem Zement eine gelatinöse Masse ausbilden, die das Abbinden des Zements verhindert, was ebenfalls zu einer verringerten Stabilität des Zementmantels führt.

Nachdem das Casing in das Bohrloch eingebracht worden ist, wird das eigentliche Förderrohr, daß einen kleineren Durchmesser als das Casing hat, installiert. Zwischen die äußere Wand des Förderrohrs und der inneren Wand des Casings wird noch eine Dichtungsflüssigkeit eingebracht. Vor dem Einbringen der Dichtungsflüssigkeit, der sogenannten "pakker-fluid" wird der Ringraum zwischen Casing und Förderrohr gereinigt, insbesondere müssen alle feinteiligen Feststoffe, die noch an der Casing- oder Förderrohrwand anhaften, entfernt werden, um die Leistung der Dichtflüssigkeit zu gewährleisten.

Die Auswahl des für die oben geschilderten Aufgaben geeigneten Reinigungsmittels ist auch von der Art der eingesetzten Bohrspülung abhängig. Man kann prinzipiell zwischen wasser- und ölbasierten Spülungen unterscheiden. Heute werden überwiegend ölbasierte Spülungen eingesetzt, entweder als sogenannten "true-oil-muds", d.h. Spülungen, die kein oder nur untergeordnete Mengen an dispergiertem Wasser enthalten, oder sogenannte "invert-muds", die zwischen 5 und 45 Gew.-% Wasser als dispergierte Phase enthalten, also eine W/O-Emulsion ausbilden. Außerdem sind wasser-basierte O/W-Emulsionen bekannt, die in einer geschlossenen wäßrigen Phase eine heterogen, feindisperse Ölphase enthalten. Als Ölphase werden üblicherweise Petroleumprodukte, wie Mineral- oder Dieselöle eingesetzt. Aufgrund der sich immer weiter verschärfenden ökologischen Anforderungen wurden aber in jüngerer Zeit auch synthetische Ölphasen entwickelt, die beispielsweise Ester bestimmter Fettsäuren enthalten. Bohrspülungen auf Basis derartiger Esteröle werden exemplarisch in den EP-Schriften 386 636, 374 671 und 374 672 beschrieben, und zeigen gegenüber Petroleumprodukten in Bezug auf ihre biologischen Abbaubarkeit und Toxizität deutlich verbesserte Eigenschaften. Bei Bohrspülungen auf Basis synthetischer Ester beobachtet man teilweise die Bildung klebrigen Rückständen auf Metalloberflächen bzw. der Bohrlochwand, die ebenfalls zu störenden Ablagerungen führen können.

Die Reinigungsmittel werden, ähnlich wie der Zement beim Zementierungsprozess, in flüssiger Form durch das Bohrgestänge nach unten gepumpt, treten an der Sohle des Bohrlochs aus und werden im Ringraum zwischen Rohr und Bohrlochwand nach oben gespült. Dabei lösen sie Reste der Bohrspülung und an den Oberflächen anhaftende Feststoffteilchen ab und transportieren diese aus dem Bohrloch heraus. Ein derartiges Verfahren wird beispielsweise in der WO 94/29570 im Detail beschrieben. Man setzt die Mittel üblicherweise in Form von wäßrigen oder nichtwäßrigen Lösungen bzw. Dispersionen ein. Sie können aber auch in konzentrierter, fester oder flüssiger Form direkt der Bohrspülung zugesetzt werden.

Reinigungsmittel für die oben geschilderten Aufgaben können beispielsweise Mischungen von Citronensäure, Pyrophosphat und Kaliumsalzen sein, die in fester oder gelöster Form verwendet werden. Diese Mittel eignen sich sowohl für true-oil- als auch für Invert-Bohrspülungen. Einen anderen Weg beschreibt die EP 513 899. Zum Reinigen von Bohrlöchern wird hier eine Flüssigkeit, die eine dispergierte gasförmige Phase enthält eingesetzt. Die gasförmige Phase bildet unter dem Druck und Temperaturbedingungen im Bohrloch Gasperlen bestimmter Größe, die zu einem turbulenten Fluß der durch das Bohrloch gepumpten Flüssigkeit führt und so eine mechanische Reinigung des Bohrlochs ermöglicht.

Bei der Förderung von Erdöl bilden sich häufig Paraffin- oder Asphaltablagerungen im Bohrloch oder an den Förderrohren, welche die Förderleistung beeinträchtigen. Diese Ablagerungen müssen bei Stimulierungsarbeiten entfernt werden, um die Förderrate zu verbessern.

Zur Entfernung der oben genannten Rückstände durch geeignete Reinigungsmittel werden im Stand der Technik verschiedene Lösungsansätze beschrieben. So offenbart die WO 96/01358 ein Additiv, welches ein Etheramin und/oder ein Basisöl, beispielsweise einen Ester, Diester, ein Tensid oder ein Olefin, in Kombination mit einem Alkylalkohol, vorzugsweise einem Terpenalkohol enthält. Dieses Additiv wird in Form einer wäßrigen Mischung eingesetzt. Die WO 95/17244 beschreibt eine Zusammensetzung zum Reinigen von ölverschmutzen Oberflächen, die Tenside welche HLB-Werte von mindestens 8 aufweisen in Kombination mit einem Öl enthalten. Als bevorzugte Tenside werden ethoxylierte Sorbitanfettsäureester genannt.

Nun zeigen Mittel auf Basis von ethoxylierten Sorbitanfettsäureestern zwar eine gute Reinigungswirkung, insbesondere gegenüber den bei esterbasierten Bohrspülungen auftretenden Rückständen, aber in Bezug auf die biologische Abbaubarkeit und die Toxizität können derartige Mittel noch nicht alle Anforderungen, die eine sich zunehmend verschärfende Umweltgesetzgebung fordert, erfüllen.

Es war daher eine Aufgabe der vorliegenden Erfindung, Reinigungsmittel für Bohrlöcher, Bohrgeräte oder Bohrklein bereitzustellen, die gegenüber den bekannten Mitteln bei zumindest gleicher Reinigungsleistung eine verbesserte Umweltverträglichkeit aufweisen.

Es wurde nun gefunden, daß Mittel, die für die Reinigung von Bohrlöchern oder Bohrgeräten verwendet werden und die bestimmte Alkoxylierungsprodukte, welche durch Umsetzung, bestimmter OH-gruppenhaltiger C₁₀₋₂₂ Carbonsäuren oder C₁₀₋₂₂ Carbonsäurederivaten mit Ethylenoxid, Propylenoxid und/oder Butylenoxid erhalten werden, eine dem Stand der Technik mindestens vergleichbare Reinigungswirkung aufweisen und gleichzeitig eine verbesserte Umweltverträglichkeit zeigen.

Aus der DE 41 34 973 sind wäßrige Reinigungsmittel für harte Oberflächen bekannt, die als nichtionische Tenside zwischen 1,0 und 30 Gew.-% eines Alkoxylierungsprodukts von OH-gruppenhaltigen Carbonsäuren und/oder ihren Derivaten mit 30 bis 85 % Ethylenoxid oder Propylenoxid enthalten. Der Schrift ist aber kein Hinweis zu entnehmen, daß sich derartige Mittel auch für die Reinigung von verschmutzten Oberflächen, die mit Bohrspülungen auf Basis von Petroleum oder synthetischer Ester in Kontakt kommen, eignen. Weiterhin ist der Schrift keinerlei Hinweis zu entnehmen, daß derartige Verbindungen unter den extremen Bedingungen bezüglich Druck, Temperatur, Belastung durch Scherkräfte, Kontakt mit aggressiven Medien, wie Salzwasser, wie sie beim Einsatz in Bohrlöchern auftreten, verwendbar sind.

Gegenstand der vorliegenden Erfindung ist in einer ersten Ausführungsform die Verwendung von biologisch abbaubaren Alkoxylierungsprodukten, die durch Umsetzung von Ethylenoxid. Propylenoxid und/oder Butylenoxid mit C₁₀₋₂₂-Carbonsäuren oder C₁₀₋₂₂-Carbonsäurederivaten erhalten werden, die wenigstens in Stellung 9/10 und/oder 13/14 Struktureinheiten der allgemeinen Formel (I) 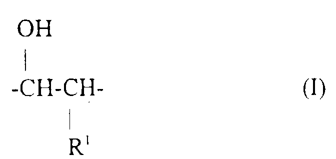 enthalten, in der
R¹ ein Wasserstoffatom, oder eine OH-Gruppe oder eine OR²-Gruppe bedeutet, R² eine Alkylgruppe mit 1 bis 18 C-Atomen, eine Alkenylgruppe mit 2 bis 18 C-Atomen oder eine Gruppe der Formel (II) bedeutet 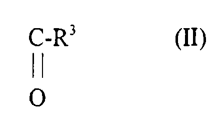 und R³ für ein Wasserstoffatom, eine Alkylgruppe mit 1 bis 21 C-Atomen oder eine Alkylengruppe mit 2 bis 21 C-Atomen steht,
zur Reinigung von Bohrlöchern, Bohrgeräten oder Bohrklein.

Die Alkoxylierungsprodukte selbst sind nicht neu. Die Herstellung derartiger Verbindungen kann gemäß der Lehre der DE 39 23 394 erfolgen, die auch Teil der Offenbarung der vorliegenden Anmeldung ist, indem die OH-gruppenhaltigen Carbonsäurederivate beispielsweise bei Temperaturen zwischen 110 und 200 °C und Drücken zwischen 10⁵ und 2x10⁶ Pa mit Ethylenoxid, Propylenoxid und/oder Butylenoxid in Gegenwart eines geeigneten Katalysators umgesetzt werden.

Als Edukte für OH-gruppenhaltige C₁₀₋₂₂-Carbonsäuren oder C₁₀₋₂₂-Carbonsäurederivate eignen sich alle OH-gruppenfreien, ungesättigten, natürlich vorkommenden und/oder synthetisch herstellbaren C₁₀₋₂₂-Carbonsäuren oder -derivate, die Carbonsäurereste mit wenigstens einer oder zwei Doppelbindungen in 9-, 12-, 13- oder 14-Stellung enthalten. Beispiele für ungesättigte Carbonsäurederivate sind 9c-Dodecensäure, 9c-Tetradecensäure, 9c-Hexadecensäure, 9c-Octadecensäure, 9t-Octadecensäure, 9c-12c-Octadecadiensäure, 9c-12c-15c-Octadecatriensäure, 9c-Eicosansäure und/oder 13c-Docosensäure, und/oderMischungen mit wenigstens einem hohen Gehalt solcher ungesättigter Carbonsäuren. Als Edukte werden vorzugsweise Carbonsäuren mit 16 bis 22 C-Atomen und wenigstens einer oder zwei Doppelbindungen in 9- und /oder 13-Stellung oder Carbonsäuregemische mit wenigstens einem hohen Gehalt an Carbonsäuren die 16 bis 22 C-Atome und wenigstens eine oder zwei Doppelbindungen in 9- und/oder 13-Stellung haben, eingesetzt.

Als ungesättigte Carbonsäurederivate eignen sich beispielsweise ungesättigte C₁₀₋₂₂-Carbonsäureester beispielsweise ungesättigte C₁₀₋₂₂-Carbonsäurealkylester mit einwertigen Alkoholen mit 1 bis 18 C-Atomen. Besonders geeignet sind C₁₀₋₂₂-Carbonsäuremono-, di- und/oder -triglyceride, die OH-gruppenfreie, ungesättigte C₁₀₋₂₂-Carbonsäurereste mit wenigstens einer oder zwei Doppelbindungen in 9- und/oder 13-Stellung enthalten. Geeignet sind auch Ester der C₁₀₋₂₂-Carbonsäuren mit anderen Polyolen, wie Ethylenglykol oder Trimethylolpropan.

Beispiele für ungesättigte C₁₀₋₂₂-Carbonsäure-C₁₋₁₈-alkylester. die sich in bekannter Weise durch Veresterung der entsprechenden ungesättigten Carbonsäure oder durch Umesterung der entsprechenden Mono-, Di- und/oder Triglyceride mit C₁₋₁₈-Alkylalkoholen, beispielsweise Methanol. Ethanol. Propanol, Butanol, Isobutanol, 2-Ethylhexanol, Decanol und/oder Stearylalkohol, zugänglich sind. sind Palmitoinsäuremethylester, Ölsäuremethylester, Ölsäureethylester, Ölsäureisobutylester, Ölsäure-2-ethylhexylester und/oder Ölsäurededecylester und/oder C₁₀₋₂₂-Carbonsäure-C₁₋₁₈-alkylestergemische mit wenigstens einem hohen Anteil an solchen C₁₀₋₂₂-Carbonsäure-C₁₋₁₈-alkylestern, die in den Carbonsäureestern wenigstens eine oder zwei Doppelbindungen in 9- und/oder 13-Stellung haben, wie Palmölmethylester, Sojaölmethylester, Rübölmethylester und/oder Talgfettsäureethylester. Weiterhin eignen sich insbesondere Fette und/oder Öle natürlichen Ursprungs, deren Carbonsäuregehalt sich überwiegend aus ungesättigten C₁₀₋₂₂-Carbonsäuren mit wenigstens einer oder zwei Doppelbindungen in 9-und/oder 13-Stellung zusammensetzt, wie beispielsweise Olivenöl, Leinöl, Sonnenblumenöl, Sojaöl, Erdnußöl, Baumwollsaatöl, Rüböl, Palmöl. Schmalz und/oder Talg als Ausgangsstoffe für die Herstellung der Alkoxylierungsprodukte.

Ungesättigten C₁₀₋₂₂-Carbonsäuren und/oder C₁₀₋₂₂-Carbonsäurederivate können beispielsweise durch Umsetzung mit Peressigsäure in Anwesenheit saurer Katalysatoren oder mit *in situ* aus Ameisensäure und Wasserstoffperoxid gebildeten Perameisensäure zu den OH-gruppenhaltigen Verbindungen epoxidiert werden. Anschließend werden die Oxiranringe der epoxidierten Carbonsäuren und/oder Carbonsäurederivate durch Umsetzung mit Wasserstoff oder protischen Verbindungen, wie Wasser, gerad- und/oder verzweigtkettigen Alkyl- und/oder Alkenylalkoholen mit 1 bis 18 C-Atomen oder gerad- und/oder verzweigtkettigen, gesättigten und/oder ungesättigten C₁₋₁₈-Carbonsäuren, unter Ausbildung von Hydroxygruppen aufgespalten. Es können aber auch andere natürlichen oder synthetischen Verbindungen, die epoxidhaltige Carbonsäuren oder Carbonsäuredrivate enthalten, wie Ricinusöl bzw. gehärtetes Ricinusöl, eingesetzt werden. Die Bedingungen der Aufspaltung werden so gewählt, daß die vorhandenen Säurederivate- und Säuregruppen intakt bleiben. Die Umsetzung epoxidierter Carbonsäurederivate und/oder epoxidierter Carbonsäuren mit protischen Verbindungen kann beispielsweise gemäß den in der DE 39 23 394 beschriebenen Verfahren erfolgen.

Die durch die Aufspaltung der Oxiranringe erhältlichen Carbonsäuren und/oder Carbonsäurederivate, die Carbonsäurereste mit wenigstens einer OH-Gruppe in 9, 10, 13 und/oder 14 Stellung enthalten, werden anschließend nach bekannten großtechnischen Verfahren mit Ethylenoxid. Propylenoxid und/oder Butylenoxid umgesetzt, vorzugsweise erfolgt die Umsetzung mit Ethylenoxid und/oder Propylenoxid. Besonders bevorzugt ist die Verwendung von solchen Alkoxylierungsprodukten, die durch Alkoxylierung von Verbindungen der Formel (I) in der R¹ eine Gruppe OR² und R² einen Rest der Formel (II) bedeutet, erhalten werden. Besonders bevorzugt sind solche Verbindungen, bei denen der Rest R³ für eine Alkylgruppe mit 8 bis 16. vorzugsweise 8 bis 10 C-Atomen steht.

Die alkoxylierten Verbindungen werden insbesondere zur Reinigung von Bohrlöchern verwendet, wobei hier insbesondere die Wände des Bohrlochs selber aber auch Förder- oder Futterrohre bzw. Casingwände unter Verwendung der alkoxylierten Verbindungen gereinigt werden können. Unter Bohrgeräte fallen beispielsweise Rohrleitungen und Pipelines aber auch Werkzeuge, die bei Bohrprozessen verwendet werden und die mit anderen Bohrflüssigkeiten und/oder Erdöl in Kontakt kommen. Weiterhin lassen sich die Alkoxylierungsprodukte zum Reinigen von Bohrklein verwenden, den sogenannten "cuttings". Diese fallen beim Erbohren an und müssen bei off-shore-Bohrungen auf den Seeboden in der Umgebung der Bohrplattform abgelagert werden, was zu einem starken Eintrag von Mineralöl in die Umwelt führen kann. Um eine ökologische Belastung des Meeres weitgehend zu vermeiden, werden die cuttings vorher gereinigt und von den Resten der Bohrspülung befreit.

Bevorzugt werden solche Alkoxylierungsprodukte verwendet. die durch Umsetzung von Mono-, Di- oder Triglyceriden der C₁₀₋₂₂-Carbonsäuren mit Ethylenoxid, Propylenoxid und/oder Butylenoxid erhalten werden. Die Alkoxylierungsprodukte werden vorzugsweise durch Anlagerung von 0,2 bis 4 Teilen Ethylenoxid, Propylenoxid und/oder Butylenoxid mit 1 Teil der OH-gruppenhaltigen C₁₀₋₂₂-Carbonsäuren und/oder C₁₀₋₂₂ Carbonsäurederivaten erhalten. Besonders bevorzugt sind solche Alkoxylierungsprodukte, die durch Anlagerung von 1,0 bis 2,0 und insbesondere 1,5 bis 1,8 Teilen Ethylenoxid, Propylenoxid und/oder Butylenoxid mit 1 Teil der OH-gruppenhaltigen C₁₀₋₂₂-Carbonsäuren und/oder C₁₀₋₂₂ Carbonsäurederivate erhalten werden. Besonders geeignet sind Produkte, die durch Umsetzung mit Ethylenoxid und/oder Propylenoxid erhalten werden. Es kann insbesondere vorteilhaft sein, Produkte zu verwenden, die nur durch Umsetzung mit Ethylenoxid bzw. nur mit Propylenoxid erhalten werden.

Es ist vorteilhaft, die Alkoxylierungsprodukte in einer Mischung mit bestimmten Alkoholen zu verwenden. Diese Mischungen können direkt einer Stimulierungsflüssigkeit zugesetzt werden. Vorteilhafterweise werden diese Mischungen jedoch zusammen mit zusätzlichen Inhaltsstoffen zu fertigen Reiningungsmitteln formuliert, die zum Reinigen von Bohrlöcher, Bohrgeräten oder Bohrklein verwendet werden.

Ein weitere Gegenstand der vorliegenden Anmeldung sind daher Additive zum Reinigen von Bohrlöchern, Bohrgeräten oder Bohrklein, welche die oben beschriebenen biologisch abbaubaren Alkoxylierungsprodukte in Mengen zwischen 40 und 90 Gew.-% und zwischen 10 und 60 Gew.-% C₁₋₁₀-Alkylalkohole enthalten. Weiterhin enthalten die Additive vorzugsweise zwischen 1 und 10 Gew.-% Wasser.

Die Alkohole können verzweigt oder unverzweigt, gesättigt oder ungesättigt sein. Bevorzugt sind Alkohole, die in Bezug auf ihre Umweltverträglichkeit ähnlich gute Ergebnisse aufweisen, wie die oben genannten Alkoxylierungsprodukte. Geeignete Alkohole sind beispielsweise Ethanol, Hexanol, Octanol, Methylhexanol. Besonders bevorzugt sind 2-Ethylhexanol und Butylglykol. Daneben können aber auch noch andere Verbindungen eingesetzt werden, vorzugsweise Terpene und/oder Terpenalkohole, welche einen hohen Flammpunkt aufweisen. Besonders bevorzugt ist die Verwendung von Limonen.

Weiterhin können die Additive Ester aus C₁₋₂₄ Fettsäuren mit C₁₋₁₈ Alkoholen enthalten. Als Alkohole eignen sich auch Polyole wie Ethylenglykol, Glycerin oder Trimethylolpropan. Bevorzugt sind Ester aus C₂₋₁₂-Alkoholen mit C₁₈₋₂₄-Fettsäuren, C₄₋₁₂-Fettsäuren, C₁₂₋₁₆-Fettsäuren. Dabei kann es vorteilhaft sein, daß die Additive Mischungen, vorzugsweise im Gewichtsverhältnis von 2 : 1 bis 1 : 2 und insbesondere 1 : 1 dieser Ester mit 2-Ethylhexanol oder Butylglykol enthalten. Derartige Additive eignen sich insbesondere für die Reinigung stark öliger Verschmutzungen oder als oil-spill-Dispergatoren. In letzterem Fall wird Rohöl, welches auf der Wasseroberfläche treibt, mit den Mitteln besprüht, so daß das Öl zu feindispersen Tröpfchen dispergiert wird, welche schneller biologisch abgebaut werden. Zu diesem Zweck werden bislang herkömmliche Tenside eingesetzt, die aber eine höhere aquatische Toxizität aufweisen, als die in den erfindungsgemäßen Mitteln enthaltenen Alkoxylierungsprodukte, da die bekannten Tenside die Oberflächenspannung stark herabsetzen.

Die Additive werden vorzugsweise in Form von Lösungen oder Dispersionen formuliert, wobei salzwasserhaltige Formulierungen bevorzugt sind. Es können aber auch andere geeignete Lösungsmittel verwendet werden. In einer weiteren Ausführungsform der Erfindung werden daher Mittel zum Reinigen von Bohrlöchern, Bohrgeräten oder Bohrklein beansprucht, welche die oben beschriebenen Additive gelöst oder dispergiert in Seewasser bzw. hochkonzentrierter Salzlösungen enthalten.

Unter Seewasser wird im Rahmen dieser Anmeldung Wasser mit einem Salzgehalt zwischen 0,2 und 5 Gew.-% verstanden (vergl. Römpps Chemie-Lexikon, 9. Auflage 1992, Seiten 2669-2670). Die Mittel können die Additive in Mengen zwischen 1 und 90 Gew.-% enthalten. Dabei sind jedoch solche Mittel bevorzugt, welche die Additive in Mengen zwischen 1 und 10 Gew.-%, bezogen auf die Gesamtmenge der Mittel, enthalten. Die Mittel können neben den erfindungsgemäßen Additive noch weitere geeignete Inhaltsstoffe, wie Emulgatoren oder Viskositätsbildner, zum Beispiel Polymere oder Carboxymethylcellulose, fluid-loss Reagenzien oder Beschwerungsmittel, wie Baryt, enthalten. Besonders geeignet sind die erfindungsgemäßen Zusammensetzungen bei der Reinigung von Bohrlöchern, bei denen mit esterbasierten wäßrigen Invert-Bohrspülungen gearbeitet wird. Vorteilhaft ist es auch, die Mittel in Bohrlöchern einzusetzen, welche für die Zementierung vorbereitet oder bei denen der Ringraum von Casing und Förderrohr mit einer Dichtungsflüssigkeit versehen werden soll. Dabei können mit den erfindungsgemäßen Mittel nicht nur Metalloberflächen, wie die von Bohrgestängen und Casings, sondern insbesondere auch die Bohrlochwände gereinigt werden.

Die erfindungsgemäßen Mittel können zu allen dem Fachmann bekannten Reinigungsvorgängen, die im Bereich der Erdreichbohrungen auftreten, sowohl bei off-shore-Bohrungen als auch bei Bohrungen an Land, verwendet werden. Dazu gehört insbesondere die Entfernung von Paraffinablagerungen von Bohrlochwänden. Üblicherweise werden Bohrlöcher gereinigt, indem eine Reinigungsflüssigkeit unter Druck durch das Bohrloch gepumpt wird und durch die Reinigungsflüssigkeit die Ablagerungen von den Wänden des Bohrlochs entfernt werden. Anschließend werden die Verunreinigungen mit der Flüssigkeit aus dem Bohrloch transportiert. Beansprucht wird daher auch ein Verfahren zum Reinigen von Bohrlöchern, indem durch das Bohrloch nach der oben beschriebenen Methode eines der erfindungsgemäßen Mittel gepumpt wird.

Die Mittel können auch zur Reinigung von vorzugsweise ölverschmutzen Gegenstände, wie Werkzeuge, Rohrleitungen oder Bohrklein, die im Bereich der Erdreichbohrung anfallen, verwendet werden. Dazu wird das erfindungsgemäße Mittel auf die Oberflächen der Gegenstände aufgesprüht oder aufgetragen oder die zu reinigenden Gegenstände werden in die Zusammensetzungen eingetaucht. Dabei lösen sich die Verunreinigungen von den Oberflächen. Anschließend werden die Oberflächen so mit Wasser in Kontakt gebracht, daß die Mittel zusammen mit den Verunreinigungen entfernt werden, beispielsweise indem die Oberfläche mit einem Wasserstrahl abgespritzt werden.

Ein weitere Gegenstand der vorliegenden Erfindung betrifft daher ein Verfahren zum Reinigen der Oberflächen von Bohrgeräten oder von Bohrklein, indem die Oberflächen zunächst mit einer Reinigungsflüssigkeit in Kontakt gebracht und anschließend die Oberflächen mit Wasser abgespült werden, wobei als Reinigungsflüssigkeit eine der oben beschriebenen erfindungsgemäße Mittel verwendet wird.

### Beispiele

Zur Bestimmung der Reinigungsleistung von Bohrlochreinigungsmitteln wurden drei unterschiedliche Verbindungen mit Seewasser zu einer Lösungen verdünnt, die 5 Gew.-% einesAdditivs enthielten. Diese Additive enthielten, bezogen auf das Gewicht des Additivs, jeweils 56 Gew.-% 2-Ethylhexanol und 1 Gew.-% Wasser sowie 45 Gew.-% von
- A: Sorbitanmonooleat + 10 EO (OMC 809, Handelsprodukt der Firma Fa. Henkel)
- B: Sorbitanmonooleat + 20 EO (Tween 20, Handelsprodukt der Fa. Atlas)
- C: Reaktionsprodukt aus einem mit Vorlauffettsäure umgesetzten hydrierten Sojaölepoxid mit 61 Gew.-% EO

Die Komponente C wurde hergestellt, indem 1225 g (7,9 Mol) Vorlauffettsäure (60 % C₈, 35 % C₁₀, SZ = 361,9) vorgelegt wurden. Dann wurde unter Rühren auf 150 °C erwärmt und innerhalb von 1 Stunde mit 1770 g (7,5 Mol auf Epoxid-O bezogen) Sojaölepoxid (Epoxid-O = 6,78) versetzt. Nach beendeter Zugabe wurde die Temperatur langsam auf 170 °C erhöht und nach 2 Stunden (Epoxid-O < 0,15 %) im Vakuum bis 200 °C andestilliert (469 g Destillat). Das Endprodukt ist ein gelbes, klares Polyol (Viskosität = 5550 mPas: 20 °C; OHZ = 105. VZ = 236, SZ = 3,1)
423 g (39 Teile) des Umsetzungsproduktes von Sojaölepoxid mit Vorlauffettsäure wurden mit 6,9 g einer 30 %igen Lösung von Kaliumhydroxid in Methanol versetzt und einem Autoklaven auf 100 °C erhitzt. Bei dieser Temperatur wurden die vorhandenen Methanolspuren durch 5-maliges evakuieren und belüften mit Stickstoff als Schutzgas entfernt. Nach Erhöhung der Reaktionstemperatur auf 150 °C wurden insgesamt 660 g (61 Teile) Ethylenoxid portionsweise so zudosiert, daß der Druck im Reaktor einen Wert von 5 bar nicht überstieg. Nach Beendigung der Reaktion wurde auf 80 bis 100 °C abgekühlt und zur Entfernung von Ethylenoxidspuren ca. 15 Minuten evakuiert und mit Milchsäure neutralisiert. Das Rohprodukt ist eine klare, gelbe Flüssigkeit (OHZ = 54,7).

Als Verschmutzung wurde eine Invert-Bohrspülung eingesetzt, welche in üblicher Weise unter Benutzung der folgenden Mischungsbestandteile hergestellt wurde:

| | |
|---|---|
| 250 ml | 2-Ethylhexyloleat |
| 83,5 g | Wasser |
| 42,6 g | organophiler Bentonit |
| 1,2 g | Kalk |
| 9,7 g | W/O Emulgator ("EZ-Mul" der Fa. NL Baroid) |
| 100,0 g | CaCO₃ |
| 100,0 g | Baryt |
| 26,8 g | CaCl₂·2 H₂O |
| 42,6 g | organophiler Lignit ("Duratone" der Fa. NL Baroid) |

Zunächst wurden durch Viskositätsmessungen bei 50 °C am ungealterten Material die Plastische Viskosität (PV), die Fließgrenze (YP) sowie die Gelstärke nach 10 Sekunden und 10 Minuten bestimmt. Anschließend wurde die Invert-Bohrspülung 16 h bei 200 °F im Autoklaven im sogenannten "Roller-Oven" gealtert und dann erneut die Viskositätswerte bei 50 °C bestimmt.

Die Spülung wies die folgenden Werte auf:

| | ungealtertes Material | gealtertes Material |
|---|---|---|
| Plastische Viskosität (PV) [cP] | 175 | 130 |
| Fließgrenze (YP) [lb/100 ft²] | 128 | 95 |
| Gelstärke [lb/100 ft²] | | |
| 10 Sekunden | 31 | 51 |
| 10 Minuten | 27 | 30 |

Auf die Wände eines Mischbechers mit bekanntem Gewicht wurden mit einem Pinsel 8 g der gealterten Spülung homogen bis zur 350 ml Marke aufgetragen. Anschließend wurden 200 ml der 5 Gew.-% Reinigungslösung in den Mischbecher gefüllt und dieser per Hand drei Minuten geschüttelt. Die Lösung wurde dann ausgeschüttet und der Mischbecher für zwei Minuten mit der Öffnung nach unten auf ein Filterpapier gestellt. Anschließend wurde der Mischbecher gewogen. Aus der Differenz zu dem bekannten Gewicht des Mischbechers und der Spülung konnte der prozentuale Reinigungseffekt bestimmt werden. Anschließend wurde der Becher erneut mit der zuvor benutzten Lösung drei Minuten geschüttelt. Anschließend erfolgte, nachdem der Becher wieder für zwei Minuten mit der Öffnung nach unten auf ein Filterpapier gestellt worden war, eine erneute Gewichtsmessung des Mischbechers.

Die prozentuale Reinigungsleistung der einzelnen Mittel kann Tabelle 1 entnommen werden.

**Tabelle 1**

| | % Reinigungsleistung | % Reinigungsleistung |
|---|---|---|
| Mittel | 1. Reinigungsschritt | 2. Reinigungsschritt |
| A | 0 | 38,2 |
| B | 0,5 | 20,2 |
| C | 28.6 | 38,9 |

Die Versuchsergebnisse zeigen, daß die erfindungsgemäßen. biologisch abbaubaren Mittel (C) eine vergleichbare Reinigungsleistung für ölverschmutzte Oberflächen aufweisen, wie die bislang bekannten, ökologisch bedenklichen Verbindungen auf Basis von ethoxylierten Sorbitanmonofettsäureestern (A und B), jedoch im Vergleich bereits im ersten Reinigungsschritt eine deutliche Reinigungsleistung zeigen. Die erfindungsgemäßen Alkoxylierungsprodukte zeigen also eine schnellere Wirkung als die Vergleichsprodukte.

Für das im Mittel (C) verwendete Alkoxylierungsprodukt wurde die biologische Abbaubarkeit gemäß OECD Methode 301 A (Die-Away-Test) bestimmt. Es wurde gefunden, daß 54 % des DOC (dissolved organic carbon) nach 28 Tagen nicht mehr nachweisbar waren.
Die EC₅₀ für die gleiche Substanz beträgt 800 mg/l
(Daphnientest, akute Toxizität, gemessen nach EU-Richtlinie 92/69/EWG, 31 Juli 1992)
Die LC₂₀ liegt bei 220 mg/l
(Zebrafischtest, akute Toxizität, gemessen nach EU-Richtlinie 92/69/EWG, 31 Juli 1992)

## Patentansprüche

1. Verwendung von biologisch abbaubaren Alkoxylierungsprodukten. die durch Umsetzung von Ethylenoxid, Propylenoxid und/oder Butylenoxid mit C₁₀₋₂₂-Carbonsäuren oder C₁₀₋₂₂-Carbonsäurederivaten erhalten werden, die wenigstens in Stellung 9/10 und/oder 13/14 Struktureinheiten der allgemeinen Formel (I) 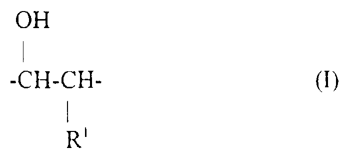 enthalten, in der
R¹ ein Wasserstoffatom, oder eine OH-Gruppe oder eine OR²-Gruppe bedeutet, R² eine Alkylgruppe mit 1 bis 18 C-Atomen. eine Alkenylgruppe mit 2 bis 18 C-Atomen oder eine Gruppe der Formel (II) bedeutet 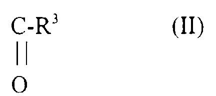 und R³ für ein Wasserstoffatom, eine Alkylgruppe mit 1 bis 21 C-Atomen oder eine Alkylengruppe mit 2 bis 21 C-Atomen steht,
zur Reinigung von Bohrlöchern, Bohrgeräten oder Bohrklein.

2. Verwendung nach Anspruch 1. dadurch gekennzeichnet, daß Alkoxylierungsprodukte verwendet werden, die durch Umsetzung von C₁₀₋₂₂-Carbonsäuremono-, di- und/oder -triglyceriden, die in 9/10 und/oder 13/14-Stellung Struktureinheiten der Formel (I) enthalten, mit Ethylenoxid. Propylenoxid und/oder Butylenoxid erhältlich sind.

3. Verwendung nach einem der Ansprüche 1 oder 2, dadurch gekennzeichnet, daß Alkoxylierungsprodukte verwendet werden, die durch Anlagerung von 1.0 bis 2.0 und insbesondere 1.5 bis 1,8 Teilen Ethylenoxid, Propylenoxid und/oder Butylenoxid mit 1 Teil der OH-gruppenhaltigen C₁₀₋₂₂-Carbonsäuren und/oder C₁₀₋₂₂-Carbonsäurederivate erhalten werden.

4. Verwendung nach einem der Ansprüche 1 bis 3, dadurch gekennzeichnet, daß Alkoxylierungsprodukte verwendet werden, die durch Umsetzung von Verbindungen der Formel (I) in der R¹ eine Gruppe OR² und R² einen Rest der Formel (II) bedeutet, mit Ethylenoxid, Propylenoxid und/oder Butylenoxid erhältlich sind.

5. Additiv zum Reinigen von Bohrlöchern, Bohrgeräten oder Bohrklein, das biologisch abbaubare Alkoxylierungsprodukte gemäß Anspruch 1 enthält, dadurch gekennzeichnet, daß das Additiv zwischen 40 und 90 Gew.-% Alkoxylierungsprodukte und zwischen 10 und 60 Gew.-% C₁₋₁₀-Alkylalkohole enthält.

6. Additiv nach Anspruch 5, dadurch gekennzeichnet, daß die Alkohole ausgewählt sind aus der Gruppe 2-Ethylhexanol und Butylglykol.

7. Additiv nach einem der Ansprüche 5 oder 6, dadurch gekennzeichnet, daß das Additiv zwischen 1 und 10 Gew.-% Wasser enthält.

8. Mittel zum Reinigen von Bohrlöchern, Bohrgeräten oder Bohrklein, dadurch gekennzeichnet, daß sie ein Additv nach einem der Ansprüche 5 bis 7 gelöst oder dispergiert in Seewasser enthält.

9. Mittel nach Anspruch 8, dadurch gekennzeichnet, daß sie das Additiv in Mengen von 1 bis 10 Gew.-%. bezogen auf die Gesamtmenge des Mittels enthält.

10. Verfahren zum Reinigen von Bohrlöchern, indem eine Reinigungsflüssigkeit durch das Bohrloch gepumpt wird, dadurch gekennzeichnet, daß als Reinigungsflüssigkeit ein Mittel nach einem der Ansprüche 8 oder 9 verwendet wird.

11. Verfahren zum Reinigen der Oberflächen von Bohrgeräten oder Bohrklein, indem die Oberflächen zunächst mit einer Reinigungsflüssigkeit in Kontakt gebracht und anschließend die Oberflächen mit Wasser abgespült werden, dadurch gekennzeichnet, daß als Reinigungsflüssigkeit ein Mittel nach einem der Ansprüche 8 oder 9 verwendet wird.

## Claims

1. The use of biodegradable alkoxylation products obtained by reaction of ethylene oxide, propylene oxide and/or butylene oxide with C₁₀₋₂₂ carboxylic acids or C₁₀₋₂₂ carboxylic acid derivatives which, at least in the 9/10 and/or 13/14 position, contain structural units corresponding to general formula (I): 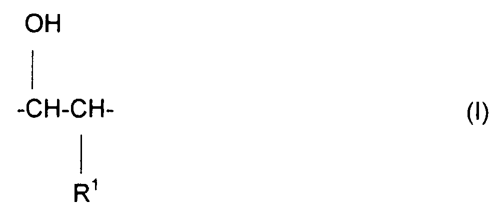 in which
R¹ is a hydrogen atom or an OH group or a group OR², where R² is an alkyl group containing 1 to 18 carbon atoms, an alkenyl group containing 2 to 18 carbon atoms or a group corresponding to formula (II): 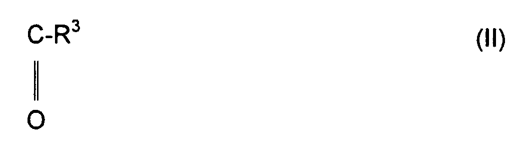 where R³ is a hydrogen atom, an alkyl group containing 1 to 21 carbon atoms or an alkylene group containing 2 to 21 carbon atoms,
for cleaning boreholes, drilling equipment or drill cuttings.

2. The use claimed in claim 1, characterized in that alkoxylation products obtainable by reaction of C₁₀₋₂₂ carboxylic acid mono-, di- and/or triglycerides containing structural units of formula (I) in the 9/10 and/or 13/14 position with ethylene oxide, propylene oxide and/or butylene oxide are used.

3. The use claimed in claim 1 or 2, characterized in that alkoxylation products obtained by addition of 1.0 to 2.0 parts and, more particularly, 1.5 to 1.8 parts of ethylene oxide, propylene oxide and/or butylene oxide with 1 part of the OH-containing C₁₀₋₂₂ carboxylic acids and/or C₁₀₋₂₂ carboxylic acid derivatives are used.

4. The use claimed in any of claims 1 to 3, characterized in that alkoxylation products obtainable by reaction of compounds corresponding to formula (I), in which R¹ is a group OR² where R² is a group corresponding to formula (II), with ethylene oxide, propylene oxide and/or butylene oxide are used.

5. An additive for cleaning boreholes, drilling equipment or drill cuttings which contains the biodegradable alkoxylation products according to claim 1, characterized in that the additive contains between 40 and 90% by weight of alkoxylation products and between 10 and 60% by weight of C₁₋₁₀ alkyl alcohols.

6. An additive as claimed in claim 5, characterized in that the alcohols are selected from the group of 2-ethyl hexanol and butyl glycol.

7. An additive as claimed in claim 5 or 6, characterized in that it contains between 1 and 10% by weight of water.

8. A composition for cleaning boreholes, drilling equipment or drill cuttings, characterized in that it contains an additive according to any of claims 5 to 7 dissolved or dispersed in seawater.

9. A composition as claimed in claim 8, characterized in that it contains the additive in quantities of 1 to 10% by weight, based on the composition as a whole.

10. A process for cleaning boreholes by pumping a cleaning fluid through the borehole, characterized in that the composition claimed in claim 8 or 9 is used as the cleaning fluid.

11. A process for cleaning the surfaces of drilling equipment or drill cuttings by initially contacting the surfaces with a cleaning fluid and then rinsing the surfaces with water, characterized in that the composition claimed in claim 8 or 9 is used as the cleaning fluid.

## Revendications

1. Utilisation de produits d'alcoxylation biodégradables que l'on obtient par réaction d'oxyde d'éthylène, d'oxyde de propylène et/ou d'oxyde de butylène avec des acides carboxyliques en C₁₀ à C₂₂ ou des dérivés d'acide carboxylique en C₁₀ à C₂₂, qui contiennent au moins en position 9/10 et/ou 13/14 des unités structurales de formule générale (I) 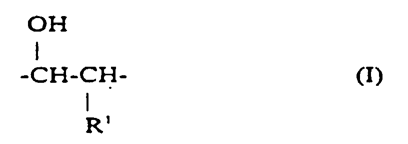 dans laquelle
R¹ représente un atome d'hydrogène, un groupe OH ou un groupe OR², R² représente un groupe alkyle ayant de 1 à 18 atomes de carbone, un groupe alcényle ayant de 2 à 18 atomes de carbone ou un groupe de formule (II) 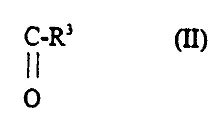 et R³ représente un atome d'hydrogène, un groupe alkyle ayant de 1 à 21 atomes de carbone ou un groupe alkylène ayant de 2 à 21 atomes de carbone,
pour le nettoyage des trous de forage, des équipements de forage ou des déblais de forage.

2. Utilisation selon la revendication 1,
caractérisée en ce qu'
on utilise des produits d'alcoxylation que l'on peut obtenir par réaction de mono-, di- et/ou triglycérides d'acides carboxyliques en C₁₀ à C₂₂ qui contiennent en position 9/10 et/ou 13/14 des unités de structure (I), avec de l'oxyde d'éthylène, de l'oxyde de propylène et/ou de l'oxyde de butylène.

3. Utilisation selon l'une des revendications 1 ou 2,
caractérisée en ce qu'
on utilise des produits d'alcoxylation que l'on obtient par fixation de 1,0 à 2,0 et en particulier de 1,5 à 1,8 partie d'oxyde d'éthylène, d'oxyde de propylène et/ou d'oxyde de butylène avec une partie d'acides carboxyliques en C₁₀ à C₂₂ et/ou de dérivés d'acides carboxyliques en C₁₀ à C₂₂ contenant des groupes OH.

4. Utilisation selon l'une des revendications 1 à 3,
caractérisée en ce qu'
on utilise des produits d'alcoxylation que l'on peut obtenir par réaction de composés de formule (I) dans laquelle R¹ représente un groupe OR² et R² un radical de formule (II), avec de l'oxyde d'éthylène, de l'oxyde de propylène et/ou de l'oxyde de butylène.

5. Additif de nettoyage des trous de forage, des équipements de forage ou des déblais de forage, qui contient des produits d'alcoxylation biodégradables selon la revendication 1,
caractérisé en ce que
l'additif contient entre 40 et 90 % en poids de produits d'alcoxylation et entre 10 et 60 % en poids d'alcools alkyliques en C₁ à C₁₀.

6. Additif selon la revendication 5,
caractérisé en ce que
les alcools sont choisis dans le groupe du 2-éthylhexanol et du butylglycol.

7. Additif selon l'une des revendications 5 ou 6,
caractérisé en ce que
l'additif contient entre 1 et 10 % en poids d'eau.

8. Agent de nettoyage des trous de forage, des équipements de forage ou des déblais de forage,
caractérisé en ce qu'
il contient un additif selon l'une des revendications 5 à 7 dissous ou dispersé dans l'eau de mer.

9. Agent selon la revendication 8,
caractérisé en ce qu'
il contient l'additif à des quantités de 1 à 10 % en poids par rapport à la quantité totale d'agent.

10. Procédé de nettoyage des trous de forage, dans lequel on pompe un liquide de nettoyage à travers le trou de forage,
caractérisé en ce qu'
on utilise comme liquide de nettoyage un agent selon l'une des revendications 8 ou 9.

11. Procédé de nettoyage de la surface des équipements de forage ou des déblais de forage par mise en contact tout d'abord des surfaces avec un liquide de nettoyage, puis par balayage des surfaces avec de l'eau,
caractérisé en ce qu'
on utilise comme liquide de nettoyage un agent selon l'une des revendications 8 ou 9.
